# EUROPEAN PATENT SPECIFICATION

(11) **EP 1 944 187 B1**
(45) Date of publication and mention of the grant of the patent: **13.11.2013**
(21) Application number: 08152678.2
(22) Date of filing: 04.08.2005
(51) Int. Cl.: B60K 31/00, B60R 21/00, B60R 21/013, B60R 21/01

(54) **Automatic collision management system**
Automatisches Kollisionsmanagementsystem
Système automatique de gestion des collisions

(43) Date of publication of application: 16.07.2008
(62) Divisional of application: 05016943.2
(73) Proprietor: Volvo Car Corporation, 405 31 Göteborg (SE)
(72) Inventor: Carlstedt, Hans, SE-433 69, Partille (SE); Andersson, Tomas, SE-437 40, Lindome (SE); Ekmark, Jonas, SE-424 70, Olofstorp (SE); Löfving, Björn, 417 63, Göteborg (SE); Edvardsson, Mikael, SE-416 69, Göteborg (SE); Broberg, Thomas, SE-414 64, Göteborg (SE)
(74) Representative: Valea AB

(56) References cited:
- WO-A-01/95141
- WO-A1-2008/043852
- DE-A1- 3 637 165
- DE-A1- 10 231 687
- DE-A1- 10 340 901
- DE-A1- 19 647 430
- DE-A1- 19 958 520
- JP-A- 9 188 133
- US-A- 5 278 764
- US-A- 5 314 037
- US-B1- 6 517 172
- US-B1- 6 623 054
- H.BAUER ET AL: "AUTOMOTIVE HANDBOOK" 2000, ROBERT BOSCH GMBH , STUTTGART , XP002525836 * pages 714,715 *

## Description

### TECHNICAL FIELD

The present invention relates to automatic collision management systems for road vehicles, for example personal automobiles as well as freight vehicles. Moreover, the present invention also concerns sensor configurations adapted for incorporation into such road vehicles for implementing such collision management systems. Furthermore, the present invention relates to methods of operating such automatic collision management systems.

### BACKGROUND OF THE INVENTION

In many traffic scenarios encountered in urban locations, for example in city traffic, distances between moving and stationary objects are often relatively short, for example a few meters. Drivers of vehicles in such scenarios are confronted with complex situations in which the drivers are susceptible to being momentarily distracted. A momentary distraction can, for example, result in one or more collisions.

Collision avoidance systems for road vehicles are known. For example, in a published United States patent no. US 6, 260, 880 (Satoshi Hada et al.), there is described a vehicle safety travel device operable to implement automatic braking to prevent a subject vehicle coming into contact with an object, and to reliably prevent, when appropriate, expansion of an air bag. The device determines relative speed between the subject vehicle and the object based on output from a radar device. The radar device is located at a front position of a corresponding road vehicle, the front position being foremost when the vehicle is travelling in a forward direction.

In another published United States patent no. US 6, 278, 924 (Gioutsos), there is disclosed a motor vehicle safety system whose deployment is controlled by an algorithm operable to calculate frontal crash velocity and vehicle occupant status. The system employs a radar-type crash velocity detection system. When a crash is determined by the system to be occurring based on accelerometer data, the algorithm determines a velocity of impact measure. This measure is employed to set a minimum velocity, for example 22.5 km/hour, below which the safety system is not deployed. In other words, the vehicle safety system is only deployed when the vehicle crash velocity is greater than the measure. The system is therefore not operable below the measure, for example in dense slow-moving traffic scenarios encountered in city traffic. Although the published patent is described as utilizing Doppler radar techniques, it is further disclosed that ultrasonic sensor using micropulses or optical techniques may alternatively be employed for determining crash velocity.

In a yet further published United States patent no. US 3, 898, 652 (Rashid), there is described a vehicle safety system for detecting objects in a vicinity of the vehicle. The system comprises a front sensor and a rear sensor. Each of these sensors includes a Doppler radar and side sensors including proximity radars. The system further includes a signal processing unit for receiving outputs from the front and rear sensors and a vehicle velocity sensor for generating an indication of the vehicle's capability of stopping prior to colliding with an object detected in front of the vehicle. Output from the signal processing unit can be applied to the vehicle's brakes and accelerator controls for slowing down the vehicle if the driver or operator of the vehicle does not respond properly to a warning signal generated by the signal processing unit.

DE 196 47 430 A discloses an automatic braking method which involves detecting the relative velocity of an obstacle in the path of the vehicle and the distance between the vehicle and the obstacle. The detected distance is compared with a braking distance of the vehicle at the detected relative velocity. An automatic braking is initiated dependent on the result of the comparison. The safe braking distance for the vehicle may be adjusted in dependence on the detected road and weather conditions.

A problem encountered is that collision-avoidance systems described in the foregoing published United States patents are not optimal in city-traffic situations wherein a complex juxtaposition of moving and stationary objects is often encountered. There is thus a requirement for increased vehicular collision management, especially in city and urban situations.

### SUMMARY OF THE INVENTION

An object of the invention is to provide an improved automatic collision management system for road vehicles, and a method for providing automatic braking in a vehicle. The invention is defined in claim 1 and claim 20.

According to the present invention, there is provided an automatic collision management system for a vehicle, said vehicle including operating features including one or more brakes operable when applied to decelerate said vehicle, said automatic collision management system including a sensor arrangement operable to detect closing velocities of one or more oncoming objects substantially in a direction of travel of the vehicle, and a processing arrangement for receiving information from the sensor arrangement indicative of said detected closing velocities, said processing arrangement being operable when the vehicle is travelling below a threshold speed to automatically selectively apply said operating features including said one or more brakes to decelerate the vehicle in response to said information received from the sensor arrangement for avoiding or mitigating a crash of the vehicle into said one or more oncoming objects.

The one or more brakes are inactive to provide automatic braking at or above the threshold speed. Rendering the automatic collision management system inactive when the vehicle is travelling at speeds above the threshold speed is of benefit in that vehicle operation is not compromised at vehicle speeds above the threshold speed.

According to the invention said sensor arrangement is operable to sense said one or more oncoming objects at a distance in a range 6 to 8 metres from the vehicle. More preferably, said sensor arrangement is operable to sense said one or more oncoming objects at a distance in a range of 6 to 8 metres from the vehicle. Such a sensing range is a practical compromise between being able to sense one or more objects which are susceptible to being a crash risk but without collecting so much information that data processing becomes intractable.

An advantage of the present invention is that the automatic collision management system becomes effective when the vehicle is travelling at a speed below the threshold speed to mitigate or avoid potential crashes.

Preferably, in the automatic collision management system, the threshold speed is in a range of 10 km/hour to 30 km/hour. More preferably, the threshold speed is substantially 20 km/hour. Such speed ranges are found to be an optimal practical compromise so that a driver of the vehicle has time to respond to the automatic braking being applied, with the automatic collision avoidance system serving to operate only when necessary.

Preferably, in the automatic collision management system, the processing arrangement is operable to cause the one or more brakes of the vehicle to decelerate the vehicle at a rate in a range of 1 metre/second/second to 5 metres/second/second. More preferably, the processing arrangement is operable to cause the one or more brakes of the vehicle to decelerate the vehicle at a rate of substantially 3 metres/second/second. Such rates of deceleration are a practical compromise between crash avoidance and crash mitigation.

Preferably, in the automatic collision management system, the sensor arrangement includes a closing velocity sensor operable to employ one or more infrared laser sensors for sensing the one or more oncoming objects. More preferably, said one or more infrared laser sensors are operable to employ pulse-echo and/or Doppler optical frequency shift analysis to detect said one or more oncoming objects.

Preferably, in the automatic collision management system, the sensor arrangement is adapted to be mounted behind a windscreen of the vehicle through which a driver of the vehicle observes a region in front of the vehicle, the sensor arrangement being operable to sense the one or more oncoming objects via the windscreen. Such spatial location of the sensor arrangement within the vehicle is of benefit in that the sensor arrangement is physically protected from damage, and that measures taken by the driver of the vehicle to maintain a windscreen of the vehicle clean for ensuring a satisfactory field of view also provides the sensor arrangement with a clear field of view. More preferably, the sensor arrangement is adapted to be mounted towards an upper region of the windscreen.

Preferably, in the automatic collision management system, the sensor arrangement is included in a windscreen electronic module (WEM). More preferably, the windscreen electronic module is integral as a unit with the windscreen. Including the sensor arrangement within a windscreen electronic module results in less component assemblies to be handled during initial assembly of the vehicle, thereby potentially decreasing its cost of manufacturing and easing subsequent routine maintenance of the vehicle.

Preferably, in the automatic collision management system, the windscreen electronic module (WEM) includes other sensors in addition to the sensor arrangement. Beneficially, the windscreen electronic module includes other types of sensors so as to enhance functionality provided from the module to the vehicle whilst not further complicating manufacture of the vehicle.

Preferably, in the automatic collision management system, the processing arrangement and the one or more brakes are coupled in mutual communication via one or more data communication networks of the vehicle. More preferably, the one or more communication networks are implemented as one or more of: HS_CAN, MS_CAN, CAN, LIN. Yet more preferably, the processing arrangement and the one or more brakes are mutually coupled by plurality of parallel communication network paths for improving braking reliability for mitigating or avoiding impact with said one or more oncoming objects.

Preferably, the automatic collision management system is operable to deploy other operational measures in addition to said automatic selective application of said one or more brakes, said other operational measures including at least one of: an audio warning, a visual warning, adaptive vehicle steering adjustment, driver pedal decoupling, adaptive seatbelt adjustment, and air bag deployment. More preferably, the processing arrangement is operable to activate the audio warning and/or the visual warning prior to said one or more brakes being applied to decelerate the vehicle. More preferably, said adaptive seatbelt adjustment is operable to tension one or more seatbelts of the vehicle in combination with said one or more brakes being applied to decelerate the vehicle.

Preferably, in the automatic collision management system, the sensor arrangement is also operable to sense precipitation external to the vehicle, and the processing arrangement is operable to modify the threshold speed and/or the deceleration of the vehicle in response to the sensed precipitation external to the vehicle. Such dynamic adjustment of the threshold speed and/or the deceleration of the vehicle is capable of enhancing vehicle control under adverse weather conditions.

Preferably, there is provided a vehicle including an automatic collision management system according to the first aspect of the invention, the system being operable to provide in operation automatic deceleration of said vehicle for crash mitigation or crash avoidance, when the vehicle is travelling below a threshold speed, said automatic collision management system being disabled in operation when said vehicle is travelling at or above the threshold speed.

Preferably, there is provided a windscreen electronic module (WEM) including a closing velocity sensor arrangement for implementing an automatic collision management system according to the first aspect of the invention, said closing velocity sensor arrangement including one or more infrared lasers for generating laser beams for detecting in operation closing velocities of one or more oncoming objects.

According to the present invention, there is provided a method of providing automatic collision management in a vehicle, said vehicle including an automatic collision management system including a sensor arrangement coupled in communication with a processing arrangement and one or more brakes of the vehicle, said method including steps of:
(a) employing the sensor arrangement to detect closing velocities of one or more oncoming objects in a sensing range of a distance of 6 to 8 metres from the vehicle in a direction of travel of the vehicle;
(b) receiving information at the processing arrangement from the sensor arrangement describing said closing velocities of said one or more oncoming objects, and assessing from said information whether or not a crash between said one or more oncoming objects and the vehicle is likely, and
(c) automatically applying said one or more brakes of the vehicle when a risk of a crash is determined by the processing arrangement to be likely, wherein said automatic braking is applied only if the vehicle is travelling in operation at a speed which is less than a threshold speed.

Preferably, in the method, the threshold speed is in a range of 10 km/hour to 30 km/hour. More preferably, the threshold speed is substantially 20 km/hour.

Preferably, in the method, the processing arrangement is operable to cause the vehicle to decelerate at a rate in a range of 1 metres/second/second to 5 metres/second/second in an event of one or more oncoming objects being detected. More preferably, the processing arrangement is operable to cause the vehicle to decelerate at a rate of substantially 3 metres/second/second in an event of one or more oncoming objects being detected.

Preferably, the method includes a step of arranging for the sensor arrangement to generate a plurality of infrared beams of optical radiation for sensing said one or more oncoming objects. More preferably, the method includes a further step of directing the infrared beams of optical radiation through a windscreen of said vehicle for sensing said one or more oncoming objects.

Preferably, in the method, the sensor arrangement is also operable to sense precipitation external to the vehicle, and the processing arrangement is operable to modify the threshold speed and/or the deceleration of the vehicle in response to the sensed precipitation external to the vehicle. Such dynamic adjustment of the threshold speed and/or the deceleration of the vehicle is capable of enhancing vehicle control under adverse weather conditions.

It will be appreciated that features of the invention are susceptible to being combined in any combination without departing from the scope of the invention as defined by the appended claims.

### BRIEF DESCRIPTION OF THE DRAWINGS

By way of example only, embodiments of the invention will now be described with reference to the accompanying drawings wherein:
- Figure 1: is a schematic illustration of a vehicle in side view, the vehicle including therein a data communication network with a closing velocity sensor for implementing an automatic collision management system pursuant to the present invention;
- Figure 2: is a schematic illustration of the communication network of the vehicle illustrated in Figure 1, the network including the closing velocity sensor for implementing automatic braking at relatively lower vehicle speeds;
- Figure 3: is a graph illustrating crash energy reduction provided by the automatic collision management system of the invention; and
- Figure 4: is a schematic top-view illustration of a mounting arrangement for the closing velocity sensor, the mounting arrangement concerning inclusion of the closing velocity sensor within a windscreen electronic module (WEM) and environmentally protected by a windscreen of the vehicle in Figure 1.

### DETAILED DESCRIPTION OF PREFERRED EMBODIMENTS

Embodiments of the invention described below are operable to provide automatic collision management, for example automatic braking, in situations in which a driver of a vehicle is confronted with a situation wherein distances are relatively short between moving and stationary objects in front of the vehicle. Such a situation can become critical when the driver experiences short moments of distraction. Moreover, automatic braking is implemented at vehicle speeds lying below a threshold. Preferably, other operating features are additionally deployed in conjunction with the automatic braking being invoked; such other operating features are provided in Table 1.

**Table 1: Additional operative features**

| **Additional operative feature** | **Example** |
|---|---|
| Vehicle adaptive steering adjustment | A steering wheel of the vehicle is thrusted by servos towards a driver of the vehicle to reduce a risk of an impact of the driver onto a windscreen of the vehicle in crash avoidance or crash mitigation situations. |
| Dynamic seatbelt adjustment | Seatbelts of the vehicle are tightened and/or mini-airbags in the seatbelts are triggered to better restrain the driver of the vehicle in crash avoidance or crash mitigation situations. |
| Dynamic pedal decoupling | Driver-operated pedals of the vehicle are decoupled to reduce driver foot and ankle injuries in crash avoidance or crash mitigation situations. |
| Airbags | Steering wheel airbag deployment, dash-boards airbag deployment in crash avoidance or crash mitigation situations. |
| Audio warning | An audio warning is provided to a driver of a vehicle, for example a bleeping sound is generated prior to one or more brakes of the vehicle being automatically applied in crash avoidance or crash mitigation situations. |
| Visual warning | A visual warning is provided to a driver of a vehicle, for example a flashing warning light is activated, prior to one or more brakes of the vehicle being automatically applied in crash avoidance or crash mitigation situations. |

For example, the threshold is conveniently set in a range of 10 to 30 km/hour, more optionally substantially 20 km/hour. Moreover, the automatic braking is optionally applied with deceleration in a range of 1 to 5 metres/second/second, more optionally at a deceleration of substantially 3 metres/second/second. The embodiments each employ a closing velocity (CV) sensor for collecting pre-crash data and thereby enabling an algorithm implemented in processing hardware of the embodiments to compute a closing velocity for determining whether or not automatic, namely autonomous, vehicle braking should be applied. Such automatic braking is, for example, of benefit in avoiding or mitigating relatively low speed frontal collisions and thereby potentially reducing costly vehicle damage as well as providing occupant protection, for example whiplash protection, pedestrian protection and so forth. The closing velocity (CV) sensor algorithm is beneficially implemented in combination with a supplementary restraints system (SRS) included in the embodiments. As well as providing automatic braking, the embodiments of the invention are also optionally configured to deploy supplementary restraints in an event of mitigating or avoiding a crash; such supplementary restraints include, for example, air bags.

In embodiments of the invention described below, closing velocity sensors incorporated therein are implemented using multiple-channel laser sensors. Preferably, each sensor has three channels. Moreover, one or more lasers utilized in each of the sensors are preferably infrared (IR) lasers. Furthermore, the lasers sensors preferably have a detection range from 4 to 10 metres, more preferably from 6 to 8 metres. As will be elucidated in greater detail later, the laser sensors are beneficially implemented in windscreen electronic modules (WEM), thereby potentially benefiting from physical protection by way of such windscreens as well as being provided a potentially clear field of view as desired by drivers for their windscreens. Moreover, integration of the laser sensors with windscreens means that vehicle assembly is not unduly made more complicated by additional components being needed to be handled during such vehicle assembly.

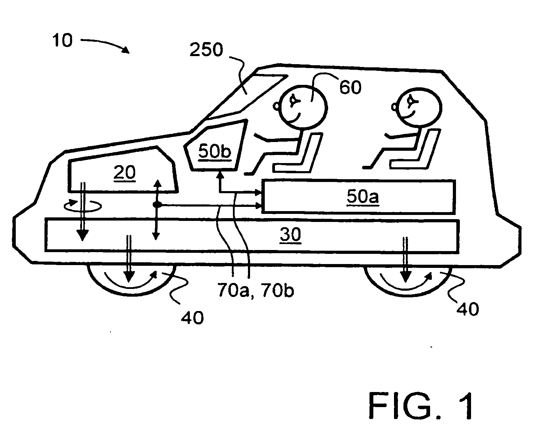

Referring to Figure 1, there is shown a road vehicle indicated generally by 10 including an automatic collision avoidance system according to the present invention. The vehicle 10 comprises an engine 20 for providing motive power, the engine 20 being coupled via a transmission arrangement 30 to one or more wheels 40 of the vehicle 10. Moreover, the vehicle 10 includes a configuration of sub-systems denoted generally by 50a, 50b coupled to associated data networks 70a, 70b for assisting a driver 60 of the vehicle 10 to operate the vehicle 10.

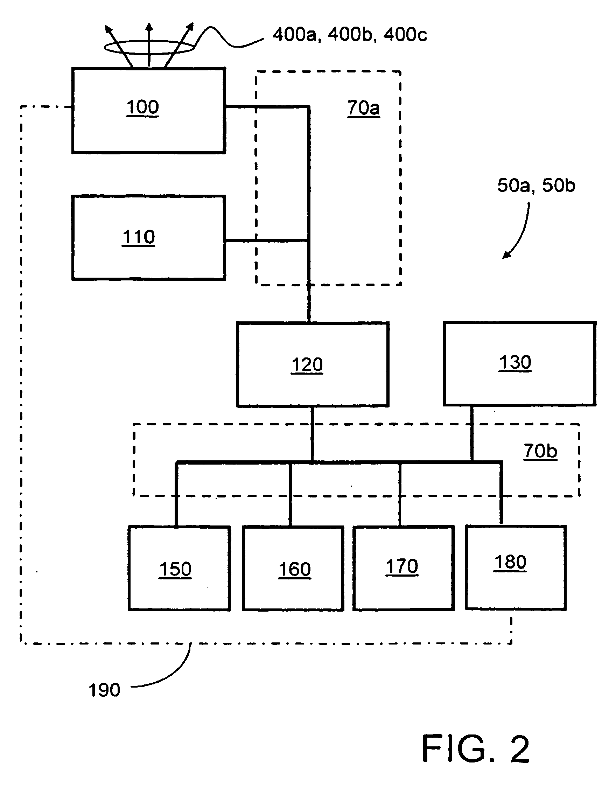

The configuration of sub-systems 50a, 50b is illustrated schematically in greater detail in Figure 2. The data networks 70a, 70b are optionally implemented to conform to conventional standards, for example in conformity with the HS-CAN or MS_CAN standard devised by Koninklijke Philips Electronics N.V. The HS-CAN standard was originally developed for engine management networks but is increasingly being adopted by motor manufacturers for passenger safety and comfort functions as well as providing a backbone for diverse vehicle functions.

Referring now to Figure 2, the aforesaid configuration of sub-systems 50a, 50b comprises a closing velocity (CV) sensor 100 and a driver information module (DIM) 110; the closing velocity (CV) sensor 100 is based on aforementioned IR-laser components. The closing velocity (CV) sensor 100 and the module 110 are coupled via the MS_CAN network 70a to a central electronic module (CEM) 120 also forming a part of the configuration of sub-systems 50a, 50b. The central electronic module 120 is, in turn, coupled to the HS_CAN network 70b. The HS_CAN network 70b is also coupled to a steering angle sensor (SAS) 130, to a brake control module (BCM) 150, to a transmission control module (TCM) 160, to an engine control module (ECM) 170, and to a supplementary restraints system (SRS) 180. The sensors 100, 130, the control modules 150, 160, 170, and the restraints system 180 are also included in the aforementioned configuration of sub-systems 50a, 50b. Optionally, a dedicated additional communication network denoted by 190, for example implemented as a CAN or LIN network, is included for enabling the closing velocity sensor 100 and the supplementary restraints system 180 to directly mutually communicate. This optional additional communication network 190 is capable of providing enhanced reliability of communication between the closing velocity sensor 100 and the supplementary restraints system 180. The supplementary restraints system 180 includes a range of operative features such as airbags, one or more brakes and other structures operable to reduce injury to the driver 60 and other occupants in the vehicle 10 in an event of a potential crash of the vehicle 10; the other structures are, for example, elucidated in the aforesaid Table 1.

Operation of the vehicle 10 will now be described in overview. The vehicle 10 is operable to move by way of motive power being coupled from the engine 20 via the transmission arrangement 30 to the one or more wheels 40. Controls accessible to the driver 60 are actuated by the driver 60 for controlling speed, direction of travel, and braking of the vehicle 10.

In an event that the vehicle 10 is travelling at a speed of less than the threshold of, for example, 20 km/hour, the configuration of sub-systems 50a, 50b is operable to implement aforementioned automatic braking in situations in which the closing velocity sensor 100, in combination with its signal processing software executing on computing hardware, identifies a risk of crash of the vehicle 10. In a scenario wherein an impact of the vehicle 10 onto an object is likely, the sensor 100 autonomously sends warning messages via the data network 70b to the brake control module 150 so that the vehicle 10 decelerates at a rate of, for example, substantially 3 metres/second/second; prior to the brake control module 150 operating to decelerate the vehicle 10, the configuration of sub-systems 50a, 50b is preferably operable to provide the driver 60 with at least one of an audio warning and a visual warning indicative that the vehicle 10 will be thereafter subject to automatic deceleration. Alternatively, or additionally, the closing velocity (CV) sensor 100 communicates directly via one or more of the additional communication networks to the supplementary restraints system 180, for example, the restraints system 180 may also include a braking function as described in the foregoing. As well as applying deceleration to the vehicle 10, the messages sent from the closing velocity (CV) sensor 100 can also trigger deployment of other secondary restraints, for example air bags or similar energy absorbing structures as elucidated in Table 1, for example to cause seatbelt tensioning in preparation for a potential crash. Such seatbelt tensioning is effective at potentially reducing occupant chest injuries in a crash situation.

It is to be appreciated that the threshold is optionally chosen to be at a relatively slow speed, in comparison to a maximum speed that the vehicle 10 is capable of travelling. Moreover, the rate of deceleration described in the foregoing is chosen to be a compromise between avoiding excessively abrupt automatic braking, and reducing the vehicle's 10 kinetic energy as much as possible so as to try to reduce potential impact damage to the vehicle 10 and injury to the driver 60.

In an event of the data networks 70a, 70b becoming overloaded with data flow or malfunctioning at a critical moment, the additional network 190 is capable of providing one or more additional communications paths, for example by way of redundancy, thereby enhancing communication reliability so that automatic braking is more reliably provided in operation in crash situations.

The automatic braking function provided in the vehicle 10 is optionally configured for achieving crash avoidance when the vehicle 10 is travelling at speeds of less than 12 km/h, namely substantially less than 3.5 metres/second speed; in such case, the vehicle 10 is brought to a stationary state within substantially 1 second after the closing velocity sensor 100 detects a potential impact.

Moreover, the automatic braking function in the vehicle 10 is optionally configured for achieving crash mitigation when the vehicle 10 is travelling at speeds in a range of 12 km/h to 20 km/h; at a speed of 20 km/h, the vehicle 10 is potentially brought to a stationary state within a period of substantially 2 seconds. However, the range of the closing velocity sensor 100, as elucidated in the foregoing, is, for example, only 6 to 8 metres which corresponds to circa 1.5 seconds travel at 20 km/h. On account of such range limitation, it will be appreciated that crash mitigation is possible to achieve in the speed range of 12 km/h to 20 km/h.

However, providing the closing velocity sensor 100 with a range of more than 6 to 8 metres potentially results in more data being collected by the sensor 100 than necessary for crash avoidance or crash mitigation, thereby potentially resulting in a risk of spurious reflections of beams emitted from the sensor 100 from objects which are not hazardous to the vehicle 10. Conversely, a smaller range than 6 to 8 metres renders the automatic collision management system potentially less effective in operation at providing crash avoidance or crash mitigation for the vehicle 10. Thus, the range of 6 to 8 metres is found to be especially suitable in practice.

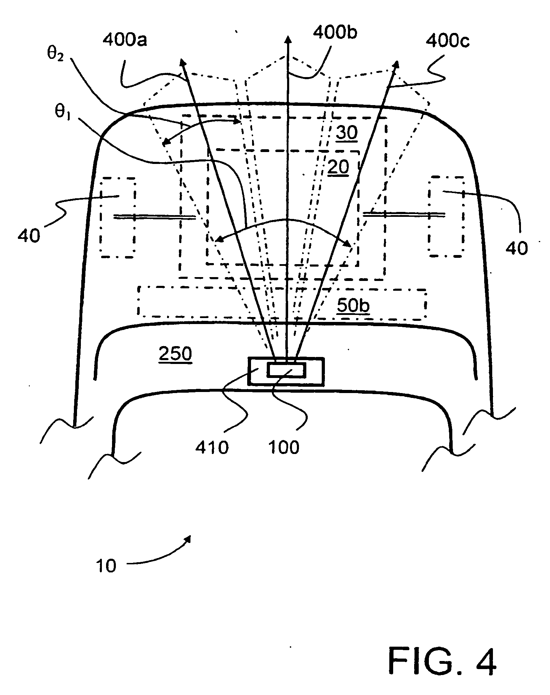

The closing velocity (CV) sensor 100 is optionally mounted at a position in the vehicle 10 whereat it is able to most optimally sense oncoming objects in front of the vehicle 10 and yet be robust to contamination, dirt, condensation, solar radiation and potential damage from stones and other small objects encountered in road environments. Moreover, the closing velocity (CV) sensor 100 is optionally included in the vehicle 10 in a position most suitable for simplifying manufacture. The closing velocity (CV) sensor 100 is most beneficially included in the vehicle as a windscreen electronic module (WEM). A windscreen 250 of the vehicle 10 is therefore optionally arranged to exhibit sufficient infrared transmission at a radiation wavelength of 905 nm substantially at which the closing velocity sensor 100 operates. In this respect, it is desirable that the closing velocity sensor 100 be included behind the windscreen 250 so that the windscreen 250 provides mechanical and weather protection for the sensor 100 and an environment within the vehicle 10 avoids problems with condensation; such an arrangement is illustrated schematically in Figure 4 whereat the electronic module (WEM) is mounted towards an upper region of the windscreen 250. Alternatively, or additionally. the closing velocity (CV) sensor 100 can also be included in combination with one or more front headlamp units of the vehicle 10, for example protected by their glass front covers; the glass front covers are beneficially operable to be transmissive to radiation having a wavelength corresponding to that of the three beams of infrared radiation generated by the closing velocity sensor 100 when in operation.

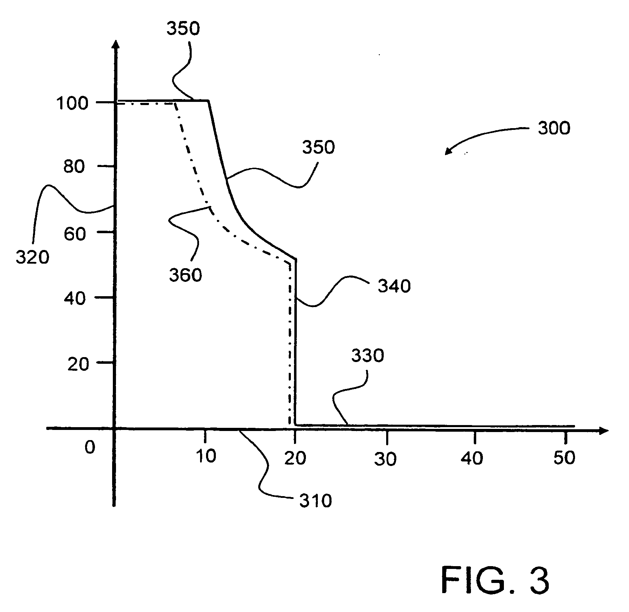

A crash energy reduction provided by the automatic collision management system pursuant to the present invention described in the foregoing is illustrated in Figure 3. In Figure 3, there is shown a graph indicated generally by 300. The graph 300 includes an abscissa axis 310 representing speed of the vehicle 10 in km/hour prior to automatic braking pursuant to the present invention being applied. Moreover, the graph 300 includes an ordinate axis 320 representing energy reduction provided to the vehicle by virtue of the aforesaid automatic braking. The automatic collision management system included in the vehicle 10 is operable to provide the vehicle 10 with energy reduction as represented by a curve on the graph, the curve being identified by curve sections 330 to 360. For speeds of the vehicle above 20 km/hour, the automatic collision management system is arranged not to intervene to provide braking; consequently, the curve section 330 then pertains wherein zero energy reduction is provided by the automatic collision management system. For speeds of the vehicle 10 around the aforesaid threshold speed of 20 km/hour, the automatic collision management system is operational to provide a degree of crash mitigation as represented by a curve section 340. Moreover, for speeds of the vehicle 10 below substantially 12 km/hour, the automatic collision management system is capable of decelerating the vehicle 10 to standstill, thereby avoiding impact and hence providing 100% crash energy reduction. In a speed range of the vehicle from substantially 12 km/hour to 20 km/hour, the automatic collision management system is operable to provide deceleration but unable to bring the vehicle to a complete standstill before the vehicle impacts onto stationary objects, thereby providing a degree of crash mitigation as represented by a curve section 350.

It will be appreciated that the curve sections 330 to 360 shown in Figure 3 will alter in form if the detection range of the closing velocity (CV) sensor 100 is modified, the deceleration rate of the automatic collision management system is altered, and the aforesaid threshold speed below which automatic braking is implemented is altered. For example, a slower rate of deceleration than 3 metres/second/second, for example substantially 2 metres/second/second, results in a crash energy reduction characteristic as represented by a curve 360.

In Figure 4, an example of spatial positioning of the closing velocity (CV) sensor 100 within the vehicle 10 is illustrated. The closing velocity (CV) sensor 100 is located optionally behind the windscreen 250 at an upper region thereof, although other positions can be adopted if required. More optionally, the closing velocity (CV) sensor 100 is included as part of a windscreen electronic module (WEM) 410. Conveniently, the WEM 410 can also include other sensors, for example optical sensors for monitoring headlights of on-coming vehicles so as to provide the vehicle 10 with an automatic headlight-dimming function. For example, the closing velocity (CV) sensor 100 is itself synergistically additionally capable of functioning as a precipitation sensor, for example a rain sensor, and as an ambient light sensor. Optionally, the aforementioned threshold speed and/or the aforementioned rate of deceleration in crash avoidance or crash mitigation situations can be modified in response to a precipitation condition detected by the closing velocity (CV) sensor 100, for example to enhance controllability of the vehicle 10 in wet or icy conditions.

The windscreen 250 is, as described earlier, fabricated from a material which allows three pulsed beams of infrared radiation 400a, 400b, 400c to propagate through the windscreen 250 and be subsequently reflected from oncoming objects in front of the vehicle 10 to generate corresponding reflected radiation which is received back at the closing rate (CV) sensor 100. By one or more of pulse-echo signal detection techniques and optical Doppler shift techniques, closing velocities of the oncoming objects can be computed at the closing rate sensor 100.

Implementation and operation of the closing velocity sensor 100 will now be described in greater detail. The closing velocity (CV) sensor 100 is designed to be optionally mounted at a relatively high position onto or close to the windscreen 250 of the vehicle 10. Such a mounting position potentially provides an optimal field of view of a region in front of the vehicle 10, namely in a region wherein one or more potential impact hazards are likely to be encountered. The sensor 100 employs the three beams 400a, 400b, 400c to provide a sensing field having an approximate lateral angular extent of θ₁ = 45° as depicted in Figure 4. The sensing field is partitioned into three sectors, each sector being served by its corresponding beam 400a, 400b, 400c, such that the beams 400a, 400b, 400c each provide a lateral sensing coverage having an angel of substantially θ₂ = 15° as depicted in Figure 4. Moreover, each beam 400a, 400b, 400c also provides a vertical field of sensing of substantially 8° with an inclination of substantially 4° in respect of a horizontal plane. Each sensing sector is provided with a set of three corresponding lenses in the sensor 100. Moreover, light sensitive diodes are employed, each in combination with its three lenses, to sense reflection of the beams 400a, 400b, 400c reflected back to the sensor 100. The diodes and their respective lenses are beneficially optically shielded from their corresponding lasers employed for generating the beams 400a, 400b, 400c to reduce direct coupling of optical radiation from the lasers to their respective light sensitive diodes. The lasers employed within the sensor 100 optionally exhibit an output radiation wavelength of substantially 905 nanometres and are class I laser category with regard to their radiation power output.

In operation, the closing velocity (CV) sensor 100 provides distance and velocity information regarding one or more oncoming objects in front of the vehicle 10 at an update rate of substantially 100 Hz, namely at 10 millisecond intervals. When measuring position and velocity, a sensing cycle is optionally implemented in the sensor 100 for each of the sectors. The cycle commences by each laser in the sensor 100 providing a burst of laser radiation for emission from the sensor 100. The burst has a duration of 2 milliseconds and comprises 100 pulses of radiation, wherein each pulse has a duration of substantially 30 nanoseconds. For each pulse emitted from the sensor 100, the aforesaid light sensitive diodes are scanned for substantially 100 nanoseconds to derive reflected radiation signals. Thereafter, a sum of all intensities in the reflected radiation signals are used for performing a distance calculation, the calculation optionally being implemented using a simple "centre of mass" approach, thereby simplifying computation required. From a determination of distance as a function of time, a closing velocity can therefrom be derived. Thus, in overview, the sensor 100 employs time-of-flight (TOF) measurements of IR-laser pulses to calculate relative distances between the vehicle 10 and one or more potentially hazardous objects in front of the vehicle 10; measured distance changes within a well-defined period of time are used to generate relative velocity data and hence aforesaid closing velocity data for the automatic collision management system.

However, it will be appreciated that the closing velocity (CV) sensor 100 can also be implemented using optical or radar Doppler techniques, wherein a portion of reflected radiation from one or more oncoming objects in a direction of travel of the vehicle 10 is mixed at the sensor 100 with a portion of radiation emitted from the sensor 100 towards the one or more oncoming objects to generate a Doppler beat signal from which a measure of closing velocity of the one or more objects to the vehicle 10 can be derived.

It will be appreciated that embodiments of the invention described in the foregoing are susceptible to being modified without departing from the scope of the invention as defined by the claims.

Although application of the present invention in the context of a road vehicle is described in the foregoing, it will be appreciated that the present invention is also applicable to trucks, lorries, vans, motorcycles, motorbikes and scooters to mention some examples. The term "vehicle" in the accompanying claims is therefore to be construed to include at least such a range of vehicle types.

Numerals included within parentheses in the accompanying claims are included to assist appreciation of subject matter claimed in the accompanying claims and are not intended to limit scope of the claims.

## Claims

1. An automatic collision management system (50a, 50b, 100, 180) for a vehicle (10), said vehicle (10) including operating features including one or more brakes operable when applied to decelerate said vehicle (10), said automatic collision management system (50a, 50b, 100, 180) including a sensor arrangement (100) operable to detect closing velocities of one or more oncoming objects substantially in a direction of travel of the vehicle (10), and a processing arrangement (50a, 50b, 100, 180) for receiving information from the sensor arrangement (100) indicative of said detected closing velocities, said processing arrangement (50a, 50b, 100, 180) being operable when the vehicle (10) is travelling below a threshold speed to automatically selectively apply said operating features including said one or more brakes to decelerate the vehicle (10) in response to said information received from the sensor arrangement (100) for avoiding or mitigating a crash of the vehicle (10) into said one or more oncoming objects, the collision management system being inactive to provide automatic braking at or above the threshold speed, **characterized in tha**t said sensor arrangement (100) has a sensing range of a distance of 6 to 8 metres from the vehicle (10), in which sensing range the sensor arrangement (100) is operable to sense said one or more oncoming objects.

2. An automatic collision management system (50a, 50b, 100, 180) as claimed in claim 1, wherein the threshold speed is in a range of 10 km/hour to 30 km/hour.

3. An automatic collision management system (50a, 50b, 100, 180) as claimed in claim 2, wherein the threshold speed is substantially 20 km/hour.

4. An automatic collision management system (50a, 50b, 100, 180) as claimed in any one of the preceding claims, wherein the processing arrangement (50a, 50b, 100, 180) is operable to cause the one or more brakes of the vehicle (10) to decelerate the vehicle (10) at a rate in a range of 1 metres/second/second to 5 metres/second/second.

5. An automatic collision management system (50a, 50b, 100, 180) as claimed in claim 4, wherein the processing arrangement (50a, 50b, 100, 180) is operable to cause the one or more brakes of the vehicle (10) to decelerate the vehicle (10) at a rate of substantially 3 metres/second/second.

6. An automatic collision management system (50a, 50b, 100, 180) as claimed in any one of claims 1 to 5, wherein the sensor arrangement (100) includes a closing velocity sensor operable to employ one or more infrared laser sensors for sensing the one or more oncoming objects.

7. An automatic collision management system (50a, 50b, 100, 180) as claimed in claim 6, wherein said one or more infrared laser sensors (100) are operable to employ pulse-echo and/or Doppler optical frequency shift analysis to detect said one or more oncoming objects.

8. An automatic collision management system (50a, 50b, 100, 180) as claimed in any one of claims 1 to 7, wherein the sensor arrangement (100) is adapted to be mounted behind a windscreen (250) of the vehicle (10) through which a driver (60) of the vehicle (10) observes a region in front of the vehicle (10), the sensor arrangement (100) being operable to sense the one or more oncoming objects via the windscreen (250).

9. An automatic collision management system (50a, 50b, 100, 180) as claimed in claim 8, wherein said sensor arrangement (100) is adapted to be mounted towards an upper region of the windscreen (250).

10. An automatic collision management system (50a, 50b, 100, 180) as claimed in any one of claims 1 to 7, wherein said vehicle (10) includes a windscreen electronic module (410), and said sensor arrangement (100) is included in said windscreen electronic module (410).

11. An automatic collision management system (50a, 50b, 100, 180) as claimed in claim 10, wherein the windscreen electronic module (410) is integral as a unit with a windscreen (250) of the vehicle (10).

12. An automatic collision management system (50a, 50b, 100, 180) as claimed in claim 10, wherein the windscreen electronic module (410) includes other sensors in addition to the sensor arrangement (100).

13. An automatic collision management system (50a, 50b, 100, 180) as claimed in any one of the preceding claims, wherein the sensor arrangement (100), the processing arrangement (50a, 50b, 100, 180) and the one or more brakes are coupled in mutual communication via one or more data communication networks (70a, 70b) of the vehicle (10).

14. An automatic collision management system (50a, 50b, 100, 180) as claimed in claim 13, wherein the one or more data communication networks (70a, 70b) are implemented as one or more of: HS_CAN, MS_CAN, CAN, LIN.

15. An automatic collision management system (50a, 50b, 100, 180) as claimed in any one of the preceding claims, wherein the sensor arrangement (100), the processing arrangement (50a, 50b, 100, 180) and the one or more brakes are mutually coupled by plurality of parallel communication network paths (70a, 70b, 190) for improving braking reliability for mitigating or avoiding impact with said one or more oncoming objects.

16. An automatic collision management system (50a, 50b, 100, 180) as claimed in any one of the preceding claims, wherein the system (50a, 50b, 100, 180) is operable for avoiding or mitigating a crash of the vehicle (10) to deploy other operative measures in addition to said automatic selective application of said one or more brakes, said other operative measures including at least one of: adaptive vehicle steering adjustment, driver pedal decoupling, adaptive seatbelt adjustment, air bag deployment, an audio warning, a visual warning.

17. An automatic collision management system (50a, 50b, 100, 180) as claimed in claim 16, wherein the processing arrangement (100) is operable to activate the audio warning and/or the visual warning prior to said one or more brakes being applied to decelerate the vehicle (10).

18. An automatic collision management system (50a, 50b, 100, 180) as claimed in claim 16, wherein said adaptive seatbelt adjustment is operable to tension one or more seatbelts of the vehicle in combination with said one or more brakes being applied to decelerate the vehicle.

19. An automatic collision management system (50a, 50b, 100, 180) as claimed in any one of the preceding claims, wherein the sensor arrangement (100) is also operable to sense precipitation external to the vehicle (10), and the processing arrangement is operable to modify the threshold speed and/or the deceleration of the vehicle (10) in response to the sensed precipitation external to the vehicle (10).

20. A method of providing automatic braking in a vehicle (10), said vehicle (10) including an automatic collision management system (50a, 50b, 100, 180) including a sensor arrangement (100) coupled in communication with a processing arrangement (50a, 50b, 100, 180) and one or more brakes of the vehicle (10); said method including steps of:
(a) employing the sensor arrangement (100) to detect closing velocities of one or more oncoming objects in a sensing range of a distance of 6 to 8 metres from the vehicle (10) in a direction of travel of the vehicle (10);
(b) receiving information at the processing arrangement (50a, 50b, 100, 180) from the sensor arrangement (100) describing said closing velocities of said one or more oncoming objects, and assessing from said information whether or not a crash between said one or more oncoming objects and the vehicle (10) is likely, and
(c) automatically applying said one or more brakes of the vehicle (10) when a risk of a crash is determined by the processing arrangement to be likely, wherein said automatic braking is applied only if the vehicle (10) is travelling in operation at a speed which is less than a threshold speed.

21. A method as claimed in claim 20, wherein the threshold speed is in a range of 10 km/hour to 30 km/hour.

22. A method as claimed in claim 21, wherein the threshold speed is substantially 20 km/hour.

23. A method as claimed in any one of the claims 20 to 22, wherein the processing arrangement (50a, 50b, 100, 180) is operable to cause the vehicle (10) to decelerate at a rate in a range of 1 metres/second/second to 5 metres/second/second in an event of one or more oncoming objects being detected.

24. A method as claimed in claim 23, wherein the processing arrangement (50a, 50b, 100, 180) is operable to cause the vehicle (10) to decelerate at a rate of substantially 3 metres/second/second in an event of one or more oncoming objects being detected.

25. A method as claimed in claim 20, including a step of arranging for the sensor arrangement (100) to generate a plurality of infrared beams (400a, 400b, 400c) of optical radiation for sensing said one or more oncoming objects.

26. A method as claimed in claim 25, including a further step of directing the infrared beams (400a, 400b, 400c) of optical radiation through a windscreen (250) of said vehicle (10) for sensing said one or more oncoming objects.

27. A method as claimed in claim 20, wherein the sensor arrangement (100) is also operable to sense precipitation external to the vehicle (10), and the processing arrangement is operable to modify the threshold speed and/or the deceleration of the vehicle (10) in response to the sensed precipitation external to the vehicle (10).

## Patentansprüche

1. Automatisches Kollisionsmanagementsystem (50a, 50b, 100, 180) für ein Fahrzeug (10), wobei das Fahrzeug (10) Betriebsmerkmale aufweist, die eine oder mehrere Bremsen umfassen, die, wenn sie angewendet werden, betreibbar sind, um das Fahrzeug (10) zu verzögern, wobei das automatische Kollisionsmanagementsystem (50a, 50b, 100, 180) eine Sensoranordnung (100), die betreibbar ist, um Annäherungsgeschwindigkeiten eines oder mehrerer ankommender Objekte im Wesentlichen in einer Bewegungsrichtung des Fahrzeugs (10) zu detektieren, und eine Verarbeitungsanordnung (50a, 50b, 100, 180), um Informationen von der Sensoranordnung (100) zu empfangen, die die detektierten Annäherungsgeschwindigkeiten angeben, umfasst, wobei die Verarbeitungsanordnung (50a, 50b, 100, 180) betreibbar ist, wenn das Fahrzeug (10) unterhalb einer Schwellengeschwindigkeit fährt, um die Betriebsmerkmale einschließlich der einen oder der mehreren Bremsen in Reaktion auf die von der Sensoranordnung (100) empfangenen Informationen wahlweise anzuwenden, um das Fahrzeug (10) zu verzögern, um einen Zusammenstoß des Fahrzeugs (10) mit dem einen oder den mehreren ankommenden Objekten zu vermeiden oder abzuschwächen, wobei das Kollisionsmanagementsystem bei oder oberhalb der Schwellengeschwindigkeit für die Bereitstellung des automatischen Bremsens inaktiv ist, **dadurch gekennzeichnet, dass** die Sensoranordnung (100) einen Erfassungsbereich über einen Abstand von 6 bis 8 Metern von dem Fahrzeug (10) hat, wobei die Sensoranordnung (100) in dem Erfassungsbereich betreibbar ist, um das eine oder die mehreren ankommenden Objekte zu erfassen.

2. Automatisches Kollisionsmanagementsystem (50a, 50b, 100, 180) nach Anspruch 1, wobei die Schwellengeschwindigkeit im Bereich von 10 km/h bis 30 km/h liegt.

3. Automatisches Kollisionsmanagementsystem (50a, 50b, 100, 180) nach Anspruch 2, wobei die Schwellengeschwindigkeit im Wesentlichen 20 km/h beträgt.

4. Automatisches Kollisionsmanagementsystem (50a, 50b, 100, 180) nach einem der vorhergehenden Ansprüche, wobei die Verarbeitungsanordnung (50a, 50b, 100, 180) betreibbar ist, um eine oder mehrere Bremsen des Fahrzeugs (10) zu veranlassen, das Fahrzeug mit einer Rate im Bereich von 1 m/s² bis 5 m/s² zu verzögern.

5. Automatisches Kollisionsmanagementsystem (50a, 50b, 100, 180) nach Anspruch 4, wobei die Verarbeitungsanordnung (50a, 50b, 100, 180) betreibbar ist, um die eine oder die mehreren Bremsen des Fahrzeugs (10) zu veranlassen, das Fahrzeug (10) mit einer Rate von im Wesentlichen 3 m/s² zu verzögern.

6. Automatisches Kollisionsmanagementsystem (50a, 50b, 100, 180) nach einem der Ansprüche 1 bis 5, wobei die Sensoranordnung (100) einen Annäherungsgeschwindigkeitssensor enthält, der betreibbar ist, um einen oder mehrere Infrarotlaser-Sensoren einzusetzen, um das eine oder die mehreren ankommenden Objekte zu erfassen.

7. Automatisches Kollisionsmanagementsystem (50a, 50b, 100, 180) nach Anspruch 6, wobei der eine oder die mehreren Infrarotlaser-Sensoren (100) betreibbar sind, um Impulsecho- und/oder Doppler-Lichtfrequenzverschiebungs-Analyse zu verwenden, um das eine oder die mehreren ankommenden Objekte zu detektieren.

8. Automatisches Kollisionsmanagementsystem (50a, 50b, 100, 180) nach einem der Ansprüche 1 bis 7, wobei die Sensoranordnung (100) dafür ausgelegt ist, hinter einer Windschutzscheibe (250) des Fahrzeugs (10), durch die ein Fahrer (60) des Fahrzeugs (10) einen Bereich vor dem Fahrzeug (10) beobachtet, montiert zu werden, wobei die Sensoranordnung (100) betreibbar ist, um das eine oder die mehreren ankommenden Objekte durch die Windschutzscheibe (250) hindurch zu erfassen.

9. Automatisches Kollisionsmanagementsystem (50a, 50b, 100, 180) nach Anspruch 8, wobei die Sensoranordnung (100) dafür ausgelegt ist, in einem oberen Bereich der Windschutzscheibe (250) montiert zu werden.

10. Automatisches Kollisionsmanagementsystem (50a, 50b, 100, 180) nach einem der Ansprüche 1 bis 7, wobei das Fahrzeug (10) ein Windschutzscheiben-Elektronikmodul (410) enthält und wobei die Sensoranordnung (100) in dem Windschutzscheiben-Elektronikmodul (410) enthalten ist.

11. Automatisches Kollisionsmanagementsystem (50a, 50b, 100, 180) nach Anspruch 10, wobei das Windschutzscheiben-Elektronikmodul (410) als eine Einheit mit einer Windschutzscheibe (250) des Fahrzeugs (10) einteilig ausgebildet ist.

12. Automatisches Kollisionsmanagementsystem (50a, 50b, 100, 180) nach Anspruch 10, wobei das Windschutzscheiben-Elektronikmodul (410) zusätzlich zu der Sensoranordnung (100) andere Sensoren enthält.

13. Automatisches Kollisionsmanagementsystem (50a, 50b, 100, 180) nach einem der vorhergehenden Ansprüche, wobei die Sensoranordnung (100), die Verarbeitungsanordnung (50a, 50b, 100, 180) und die eine oder die mehreren Bremsen in gegenseitiger Kommunikation über ein oder mehrere Datenkommunikationsnetze (70a, 70b) des Fahrzeugs (10) gekoppelt sind.

14. Automatisches Kollisionsmanagementsystem (50a, 50b, 100, 180) nach Anspruch 13, wobei das eine oder die mehreren Datenkommunikationsnetze (70a, 70b) als eines der Folgenden implementiert sind: HS_CAN, MS_CAN, CAN, LIN.

15. Automatisches Kollisionsmanagementsystem (50a, 50b, 100, 180) nach einem der vorhergehenden Ansprüche, wobei die Sensoranordnung (100), die Verarbeitungsanordnung (50a, 50b, 100, 180) und die eine oder die mehreren Bremsen durch mehrere parallele Kommunikationsnetzpfade (70a, 70b, 190) miteinander gekoppelt sind, um die Bremszuverlässigkeit zu verbessern, um einen Aufprall mit dem einen oder den mehreren ankommenden Objekten abzuschwächen oder zu vermeiden.

16. Automatisches Kollisionsmanagementsystem (50a, 50b, 100, 180) nach einem der vorhergehenden Ansprüche, wobei das System (50a, 50b, 100, 180) betreibbar ist, um einen Zusammenstoß des Fahrzeugs (10) zu vermeiden oder abzuschwächen, um andere Betriebsmaßnahmen zusätzlich zu dem automatischen wahlweisen Anwenden der einen oder der mehreren Bremsen auszulösen, wobei die anderen Betriebsmaßnahmen wenigstens eines der Folgenden umfassen:
adaptive Fahrzeuglenkeinstellung, Fahrerpedal-Entkopplung, adaptive Sicherheitsgurteinstellung, Airbag-Auslösung, Audiowarnung, visuelle Warnung.

17. Automatisches Kollisionsmanagementsystem (50a, 50b, 100, 180) nach Anspruch 16, wobei die Verarbeitungsanordnung (100) betreibbar ist, um die Audiowarnung und/oder die visuelle Warnung vor dem Anwenden der einen oder der mehreren Bremsen, um das Fahrzeug (10) zu verzögern, zu aktivieren.

18. Automatisches Kollisionsmanagementsystem (50a, 50b, 100, 180) nach Anspruch 16, wobei die adaptive Sicherheitsgurteinstellung betreibbar ist, um in Kombination mit dem Anwenden der einen oder der mehreren Bremsen, um das Fahrzeug zu verzögern, betreibbar ist, um einen oder mehrere Sicherheitsgurte des Fahrzeugs zu spannen.

19. Automatisches Kollisionsmanagementsystem (50a, 50b, 100, 180) nach einem der vorhergehenden Ansprüche, wobei die Sensoranordnung (100) außerdem betreibbar ist, um Niederschlag außerhalb des Fahrzeugs (10) erfassen, und die Verarbeitungsanordnung betreibbar ist, um die Schwellengeschwindigkeit und/oder die Verzögerung des Fahrzeugs (10) in Reaktion auf den erfassten Niederschlag außerhalb des Fahrzeugs (10) zu modifizieren.

20. Verfahren zum Bereitstellen eines automatischen Bremsens in einem Fahrzeug (10), wobei das Fahrzeug (10) ein automatisches Kollisionsmanagementsystem (50a, 50b, 100, 180) umfasst, das eine Sensoranordnung (100) enthält, die in Kommunikation mit einer Verarbeitungsanordnung (50a, 50b, 100, 180) und einer oder mehreren Bremsen des Fahrzeugs (10) gekoppelt ist; wobei das Verfahren die folgenden Schritte umfasst:
(a) Verwenden der Sensoranordnung (100), um Annäherungsgeschwindigkeiten eines oder mehrerer ankommender Objekte in einem Erfassungsbereich über einen Abstand von 6 bis 8 Metern von dem Fahrzeug (10) in einer Bewegungsrichtung des Fahrzeugs (10) zu detektieren;
(b) Empfangen von Informationen bei der Verarbeitungsanordnung (50a, 50b, 100, 180) von der Sensoranordnung (100), die Annäherungsgeschwindigkeiten des einen oder der mehreren ankommenden Objekte beschreiben, und Beurteilen anhand der Informationen, ob ein Zusammenstoß zwischen dem einen oder den mehreren ankommenden Objekten und dem Fahrzeug (10) wahrscheinlich ist oder nicht, und
(c) automatisches Anwenden der einen oder der mehreren Bremsen des Fahrzeugs (10), wenn eine Gefahr eines Zusammenstoßes durch die Verarbeitungsanordnung als wahrscheinlich bestimmt wird, wobei das automatische Bremsen nur angewendet wird, wenn das Fahrzeug (10) im Betrieb mit einer Geschwindigkeit fährt, die niedriger als eine Schwellengeschwindigkeit ist.

21. Verfahren nach Anspruch 20, wobei die Schwellengeschwindigkeit in einem Bereich von 10 km/h bis 30 km/h liegt.

22. Verfahren nach Anspruch 21, wobei die Schwellengeschwindigkeit im Wesentlichen 20 km/h beträgt.

23. Verfahren nach einem der Ansprüche 20 bis 22, wobei die Verarbeitungsanordnung (50a, 50b, 100, 180) betreibbar ist, um zu veranlassen, dass das Fahrzeug (10) mit einer Rate im Bereich von 1 m/s² bis 5 m/s² verzögert wird, falls ein oder mehrere ankommende Objekte detektiert werden

24. Verfahren nach Anspruch 23, wobei die Verarbeitungsanordnung (50a, 50b, 100, 180) betreibbar ist, um zu veranlassen, dass das Fahrzeug (10) mit einer Rate von im Wesentlichen 3 m/s² verzögert wird, falls ein oder mehrere ankommende Objekte detektiert werden.

25. Verfahren nach Anspruch 20, das einen Schritt des Anordnens der Sensoranordnung (100) umfasst, um mehrere Infrarotstrahlenbündel (400a, 400b, 400c) aus optischer Strahlung zu erzeugen, um das eine oder die mehreren ankommenden Objekte zu erfassen.

26. Verfahren nach Anspruch 25, das ferner einen Schritt des Richtens der Infrarotstrahlenbündel (400a, 400b, 400c) aus optischer Strahlung durch eine Windschutzscheibe (250) des Fahrzeugs (10), um das eine oder die mehreren ankommenden Objekte zu erfassen, umfasst.

27. Verfahren nach Anspruch 20, wobei die Sensoranordnung (100) außerdem betreibbar ist, um Niederschlag außerhalb des Fahrzeugs (10) zu erfassen, und wobei die Verarbeitungsanordnung betreibbar ist, um die Schwellengeschwindigkeit und/oder die Verzögerung des Fahrzeugs (10) in Reaktion auf den erfassten Niederschlag außerhalb des Fahrzeugs (10) zu modifizieren.

## Revendications

1. Système de gestion automatique de collision (50a, 50b, 100, 180) pour un véhicule (10), ledit véhicule (10) comprenant des caractéristiques de fonctionnement qui incluent un ou plusieurs freins aptes en fonctionnement à être appliqués à une décélération dudit véhicule (10), ledit système de gestion automatique de collision (50a, 50b, 100, 180) comprenant un dispositif à capteur(s) (100), apte en fonctionnement à détecter des vitesses d'approche d'un ou de plusieurs objets qui se rapprochent sensiblement dans la direction de déplacement du véhicule (10), et un dispositif de traitement (50a, 50b, 100, 180), prévu pour recevoir en provenance du dispositif à capteur(s) (100) des informations fournissant des indications relatives auxdites vitesses d'approche détectées, ledit dispositif de traitement (50a, 50b, 100, 180) étant, lorsque le véhicule (10) se déplace au-dessous d'une vitesse de seuil, apte en fonctionnement à appliquer automatiquement et de manière sélective lesdites caractéristiques de fonctionnement, incluant ledit ou lesdits freins, à la décélération du véhicule (10) en réponse auxdites informations reçues du dispositif à capteur(s) (100) afin d'éviter ou d'atténuer une collision du véhicule (10) dans ledit ou lesdits objets qui se rapprochent, le système de gestion de collision étant non actif pour procurer un freinage automatique à la vitesse de seuil ou au-dessus de celle-ci, **caractérisé en ce que** ledit dispositif à capteur(s) (100) a une plage de détection d'une distance de 6 à 8 mètres par rapport au véhicule (10), le dispositif à capteur(s) (100) étant, dans cette plage de détection, apte en fonctionnement à détecter ledit ou lesdits objets qui se rapprochent.

2. Système de gestion automatique de collision (50a, 50b, 100, 180) tel que revendiqué dans la revendication 1, dans lequel la vitesse de seuil est située dans une plage comprise entre 10 km/heure et 30 km/heure.

3. Système de gestion automatique de collision (50a, 50b, 100, 180) tel que revendiqué dans la revendication 2, dans lequel la vitesse de seuil est sensiblement égale à 20 km/heure.

4. Système de gestion automatique de collision (50a, 50b, 100, 180) tel que revendiqué dans l'une quelconque des revendications précédentes, dans lequel le dispositif de traitement (50a, 50b, 100, 180) est apte en fonctionnement à permettre que le ou les freins du véhicule (10) provoque(nt) une décélération du véhicule (10) d'une valeur située dans une plage comprise entre 1 mètre/seconde par seconde et 5 mètres/seconde par seconde.

5. Système de gestion automatique de collision (50a, 50b, 100, 180) tel que revendiqué dans la revendication 4, dans lequel le dispositif de traitement (50a, 50b, 100, 180) est apte en fonctionnement à permettre que le ou les freins du véhicule (10) provoque(nt) une décélération du véhicule (10) d'une valeur sensiblement égale à 3 mètres/seconde par seconde.

6. Système de gestion automatique de collision (50a, 50b, 100, 180) tel que revendiqué dans l'une quelconque des revendications 1 à 5, dans lequel le dispositif à capteur(s) (100) comprend un détecteur de vitesse d'approche apte en fonctionnement à utiliser un ou plusieurs capteurs à laser infrarouge pour détecter le ou les objets qui se rapprochent.

7. Système de gestion automatique de collision (50a, 50b, 100, 180) tel que revendiqué dans la revendication 6, dans lequel ledit ou lesdits capteurs à laser infrarouge (100) sont aptes en fonctionnement à utiliser une analyse de décalage de fréquence optique d'écho d'impulsion et/ou de type Doppler pour détecter ledit ou lesdits objets qui se rapprochent.

8. Système de gestion automatique de collision (50a, 50b, 100, 180) tel que revendiqué dans l'une quelconque des revendications 1 à 7, dans lequel le dispositif à capteur(s) (100) est prévu pour être monté à l'arrière d'un pare-brise (250) du véhicule (10) au travers duquel un conducteur (60) du véhicule (10) observe une région située en face du véhicule (10), le dispositif à capteur(s) (100) étant apte en fonctionnement à détecter à travers le pare-brise (250) le ou les objets qui se rapprochent.

9. Système de gestion automatique de collision (50a, 50b, 100, 180) tel que revendiqué dans la revendication 8, dans lequel ledit dispositif à capteur(s) (100) est prévu pour être monté au niveau de la partie supérieure du pare-brise (250).

10. Système de gestion automatique de collision (50a, 50b, 100, 180) tel que revendiqué dans l'une quelconque des revendications 1 à 7, dans lequel ledit véhicule (10) comprend un module électronique (410) de pare-brise, et ledit dispositif à capteur(s) (100) est inclus dans ledit module électronique (410) de pare-brise.

11. Système de gestion automatique de collision (50a, 50b, 100, 180) tel que revendiqué dans la revendication 10, dans lequel le module électronique (410) de pare-brise forme une seule unité avec un pare-brise (250) du véhicule (10).

12. Système de gestion automatique de collision (50a, 50b, 100, 180) tel que revendiqué dans la revendication 10, dans lequel le module électronique (410) de pare-brise incorpore d'autres détecteurs en plus du dispositif à capteur(s) (100).

13. Système de gestion automatique de collision (50a, 50b, 100, 180) tel que revendiqué dans l'une quelconque des revendications précédentes, dans lequel le dispositif à capteur(s) (100), le dispositif de traitement (50a, 50b, 100, 180) et le ou les freins sont couplés de manière à être en communication réciproque par l'intermédiaire d'un ou de plusieurs réseaux de communication de données (70a, 70b) du véhicule (10).

14. Système de gestion automatique de collision (50a, 50b, 100, 180) tel que revendiqué dans la revendication 13, dans lequel le ou les réseaux de communication de données (70a, 70b) sont constitués par un ou plusieurs des réseaux : HS_CAN, MS_CAN, CAN, LIN.

15. Système de gestion automatique de collision (50a, 50b, 100, 180) tel que revendiqué dans l'une quelconque des revendications précédentes, dans lequel le dispositif à capteur(s) (100), le dispositif de traitement (50a, 50b, 100, 180) et le ou les freins sont couplés de manière réciproque par l'intermédiaire d'une pluralité de trajets de réseau de communication parallèles (70a, 70b, 180) en vue d'améliorer la fiabilité de freinage afin d'atténuer ou d'éviter un impact avec ledit ou lesdits objets qui se rapprochent.

16. Système de gestion automatique de collision (50a, 50b, 100, 180) tel que revendiqué dans l'une quelconque des revendications précédentes, dans lequel le système (50a, 50b, 100, 180) est, afin d'éviter ou d'atténuer une collision du véhicule (10), apte en fonctionnement à mettre en oeuvre d'autres mesures de fonctionnement qui s'ajoutent à ladite application automatique et sélective dudit ou desdits freins, lesdites autres mesures de fonctionnement comprenant au moins l'une des suivantes :
un ajustement adaptatif de la direction du véhicule, un découplage des pédales du conducteur, un réglage adaptatif des ceintures de sécurité, le déploiement d'airbags, un avertissement sonore, un avertissement visuel.

17. Système de gestion automatique de collision (50a, 50b, 100, 180) tel que revendiqué dans la revendication 16, dans lequel le dispositif de traitement (100) est apte en fonctionnement à activer l'avertissement sonore et/ou l'avertissement visuel avant que ledit ou lesdits freins ne soient appliqués à la décélération du véhicule (10).

18. Système de gestion automatique de collision (50a, 50b, 100, 180) tel que revendiqué dans la revendication 16, dans lequel ledit réglage adaptatif des ceintures de sécurité est apte en fonctionnement à tendre une ou plusieurs des ceintures de sécurité du véhicule, en combinaison avec l'application dudit ou desdits freins à la décélération du véhicule.

19. Système de gestion automatique de collision (50a, 50b, 100, 180) tel que revendiqué dans l'une quelconque des revendications précédentes, dans lequel le dispositif à capteur(s) (100) est également apte en fonctionnement à détecter une précipitation extérieure au véhicule (10), et le dispositif de traitement est apte en fonctionnement à modifier la vitesse de seuil et/ou la décélération du véhicule (10) en réponse à la précipitation extérieure au véhicule (10) qui a été détectée.

20. Procédé de mise en oeuvre d'un freinage automatique dans un véhicule (10), ledit véhicule (10) incorporant un système de gestion automatique de collision (50a, 50b, 100, 180) qui comprend un dispositif à capteur(s) (100), couplé pour établir une communication avec un dispositif de traitement (50a, 50b, 100, 180), et un ou plusieurs freins du véhicule (10), ledit procédé comprenant les étapes qui consistent à :
(a) mettre en oeuvre le dispositif à capteur(s) (100) pour détecter des vitesses d'approche d'un ou de plusieurs objets qui se rapprochent dans une plage de détection de distances comprise entre 6 et 8 mètres par rapport au véhicule (10) dans la direction de déplacement du véhicule (10) ;
(b) recevoir au niveau du dispositif de traitement (50a, 50b, 100, 180), en provenance du dispositif à capteur(s) (100), des informations décrivant lesdites vitesses d'approche dudit ou desdits objets qui se rapprochent, et, à partir desdites informations, évaluer si une collision entre ledit ou lesdits objets qui se rapprochent et le véhicule (10) est probable ou non, et
(c) déclencher l'application automatique dudit ou desdits freins du véhicule (10) lorsque le dispositif de traitement a déterminé qu'un risque de collision était probable, ledit freinage automatique étant appliqué seulement si le véhicule (10) se déplace, en fonctionnement, à une vitesse qui est inférieure à une vitesse de seuil.

21. Procédé tel que revendiqué dans la revendication 20, dans lequel la vitesse de seuil est située dans une plage comprise entre 10 km/heure et 30 km/heure.

22. Procédé tel que revendiqué dans la revendication 21, dans lequel la vitesse de seuil est sensiblement égale à 20 km/heure.

23. Procédé tel que revendiqué dans l'une quelconque des revendications 20 à 22, dans lequel le dispositif de traitement (50a, 50b, 100, 180) est apte en fonctionnement à provoquer une décélération du véhicule (10) d'une valeur située dans une plage comprise entre 1 mètre/seconde par seconde et 5 mètres/seconde par seconde dans le cas où un ou plusieurs objets qui se rapprochent sont détectés.

24. Procédé tel que revendiqué dans la revendication 23, dans lequel le dispositif de traitement (50a, 50b, 100, 180) est apte en fonctionnement à provoquer une décélération du véhicule (10) d'une valeur sensiblement égale à 3 mètres/seconde par seconde dans le cas où un ou plusieurs objets qui se rapprochent sont détectés.

25. Procédé tel que revendiqué dans la revendication 20, comprenant une étape qui consiste à prévoir que le dispositif à capteur(s) (100) génère une pluralité de faisceaux infrarouges (400a, 400b, 400c) de rayonnement optique afin de détecter ledit ou lesdits objets qui se rapprochent.

26. Procédé tel que revendiqué dans la revendication 25, comprenant en outre une étape qui consiste à diriger les faisceaux infrarouges (400a, 400b, 400c) de rayonnement optique au travers d'un pare-brise (250) dudit véhicule (10) afin de détecter ledit ou lesdits objets qui se rapprochent.

27. Procédé tel que revendiqué dans la revendication 20, dans lequel le dispositif à capteur(s) (100) est en outre apte en fonctionnement à détecter une précipitation extérieure au véhicule (10), et le dispositif de traitement est apte en fonctionnement à modifier la vitesse de seuil et/ou la décélération du véhicule (10) en réponse à la détection d'une précipitation extérieure au véhicule (10).
